# EUROPEAN PATENT APPLICATION

(11) **EP 3 331 265 A1**
(43) Date of publication of application: **06.06.2018**
(21) Application number: 16832667.6
(22) Date of filing: 05.07.2016
(51) Int. Cl.: H04W 24/08, H04W 4/24, H04W 92/12

(54) **BASE STATION, DATA COMMUNICATION TRAFFIC VOLUME MANAGEMENT DEVICE, DATA COMMUNICATION TRAFFIC VOLUME REPORTING METHOD AND DATA COMMUNICATION TRAFFIC VOLUME ACQUISITION METHOD**

(30) Priority: 31.07.2015 JP 2015152658
(71) Applicant: NTT Docomo, Inc., Tokyo 100-6150 (JP)
(72) Inventor: TAKAHASHI, Hideaki, Tokyo 100-6150 (JP); UCHINO, Tooru, Tokyo 100-6150 (JP); HAPSARI, Wuri Andarmawanti, Tokyo 100-6150 (JP)
(74) Representative: Hoffmann Eitle
(86) International application number: PCT/JP2016/069876
(87) International publication number: WO 2017/022388

(57) **Abstract**

A base station in a mobile communication system, including: data communication amount measurement means configured to measure a data communication amount of a user apparatus connected to the base station for each bearer in the user apparatus for each carrier for transmitting data of the bearer; and data communication amount report control means configured to receive a data communication amount report request message from a data communication amount management apparatus in the mobile communication system, generate a data communication amount report message including a data communication amount corresponding to a request in the data communication amount report request message, and transmit the data communication amount report message to the data communication amount management apparatus.

## Description

### TECHNICAL FIELD

The present invention relates to a technique, in a mobile communication system, to obtain a transmission amount of downlink data transmitted to a user apparatus and a transmission amount of uplink data transmitted from the user apparatus.

### BACKGROUND ART

The current LTE (including LTE-Advanced) is being operated by a licensed band (to be referred to as a licensed band hereinafter) assigned to a communication operator. On the other hand, in order to absorb increasing user traffic and the like, it is being considered to expand frequencies of the LTE system by utilizing a band (to be referred to as an unlicensed band) of unlicensed spectrum that can be used other than licensed bands (non-patent document 1, for example).

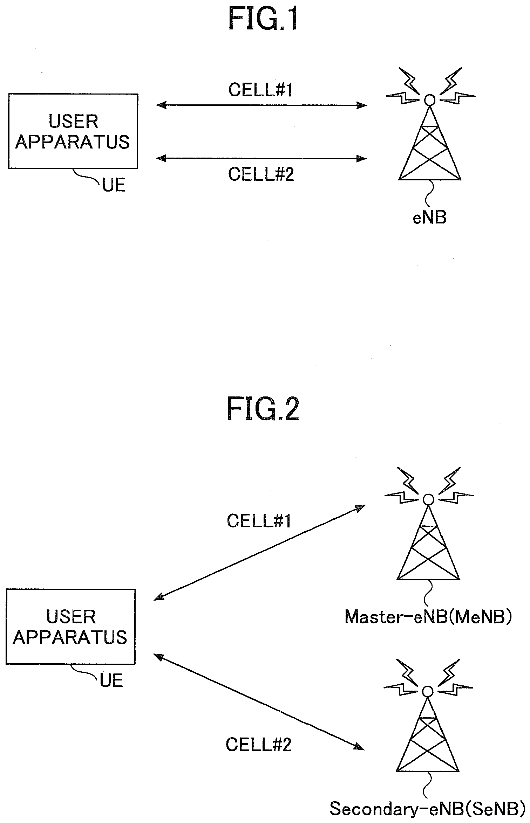

By the way, in the LTE system, carrier aggregation (CA, hereinafter) for enabling communication by simultaneously using a plurality of component carries (CC, hereinafter) is introduced. As shown in Fig. 1, in CA up to Rel-10 of LTE, high throughput can be realized by performing simultaneous communication using a plurality of cells under the same base station eNB. Each cell that forms CA includes a downlink CC, or, a downlink CC and an uplink CC. As for Fig. 1, each cell that forms CA includes both CCs of uplink and downlink, and transmission of uplink and downlink can be performed in each cell.

On the other hand, in Rel-12, this is further expanded so that Dual connectivity is proposed in which simultaneous communication is performed by cells under different base stations eNB to realize high throughputs. Dual connectivity is a kind of CA, and it is also referred to as Inter eNB CA (inter-base station carrier aggregation), in which Master-eNB (MeNB) and Secondary-eNB (SeNB) are introduced. In Dual connectivity, a cell group formed by cell(s) (one or a plurality of cells) under an MeNB is called MCG (Master Cell Group), and a cell group formed by cell(s) (one or a plurality of cells) under an SeNB is called SCG (Secondary Cell Group). PCell is set in the MCG. An UL CC is set in at least one SCell in an SCG, and PUCCH is set in one of the at least one SCell. The SCell is called PSCell (primary SCell).

Fig. 2 shows an example of Dual connectivity. In the example of Fig. 2, a base station MeNB communicates with the user apparatus UE by a CC#1, and a base station SeNB communicates with the user apparatus UE by a CC#2 so that CA is realized.

In Rel-13, it is being considered to perform carrier aggregation between a licensed band and an unlicensed band. Accordingly, the communication using the unlicensed band in addition to the licensed band is referred to as LAA (License-Assisted Access). There is a possibility in that, sometime in the future, Dual connectivity of the licensed band and the unlicensed band or standalone of the unlicensed band becomes a study target of LAA.

### RELATED ART DOCUMENT

### [NON PATENT DOCUMENT]

[NON PATENT DOCUMENT 1] RP-131701
[NON PATENT DOCUMENT 2] 3GPP TS 25.413 V7.7.0 (2007-09)
[NON PATENT DOCUMENT 3] R2-151719,Running stage-2 CR
[NON PATENT DOCUMENT 4] 3GPP TS 36.413 V13.0.0 (2015-06)

### SUMMARY OF THE INVENTION

### PROBLEM TO BE SOLVED BY THE INVENTION

In CA like the above-mentioned one, there is a possibility in that data of one bearer is provided on a plurality of carriers by different service clauses. For example, in each CA shown in Fig. 1 and Fig. 2, it can be assumed that, transmission and reception of data of one bearer are performed by using a carrier of a licensed band for a CC of the cell #1, and a carrier of an unlicensed band for a CC of the cell #2, and that only communication on the licensed band is charged, but communication on the unlicensed band is not charged, and so forth.

When charging for downlink data in LTE, for example, a downlink data amount transmitted to a user apparatus UE for a bearer is ascertained in a core network, so that charging is performed based on the data amount. Also, when performing charging for uplink data, for example, in the core network, an uplink data amount transmitted from a user apparatus UE is ascertained for a bearer, so that charging is performed based on the data amount.

However, in the current situation, the core network side does not ascertain uplink/downlink data amount for each CC. Therefore, for example, in a case where only communication by a CC of an unlicensed band is made uncharged, proper charging cannot be performed.

Further, in Rel-13, LTE/WLAN aggregation is being considered in which carriers of LTE and WLAN (Wireless LAN) are aggregated by using split bearer of Dual Connectivity to perform simultaneous transmission and reception (non-patent document 3). When LTE/WLAN aggregation is performed, for example, it can be considered that only pieces of data transmitted and received in the LTE side (Master eNB) are counted to charge for them, and that pieces of data transmitted and received in the WLAN side are not counted so as not to charge for them. However, also in this case, there is a problem same as the above-mentioned one.

The present invention is contrived in view of the above points, and an object is to provide a technique for enabling, in a mobile communication system that includes a base station and a user apparatus, to ascertain a data communication amount of communication between the user apparatus and the base station for each bearer for each carrier.

### MEANS FOR SOLVING THE PROBLEM

According to an embodiment of the present invention, there is provided a base station in a mobile communication system, including:
data communication amount measurement means configured to measure a data communication amount of a user apparatus connected to the base station for each bearer in the user apparatus for each carrier for transmitting data of the bearer; and
data communication amount report control means configured to receive a data communication amount report request message from a data communication amount management apparatus in the mobile communication system, generate a data communication amount report message including a data communication amount corresponding to a request in the data communication amount report request message, and transmit the data communication amount report message to the data communication amount management apparatus.

According to an embodiment of the present invention, there is provided a data communication amount management apparatus in a mobile communication system, including:
transmission means configured to transmit, to a base station of the mobile communication system, a data communication amount report request message for requesting report of a data communication amount in a user apparatus connected to the base station; and
reception means configured to receive a data communication amount report message including a requested data communication amount from the base station that has received the data communication amount report request message,
wherein the data communication amount report request message includes information designating at least a bearer and a carrier, and wherein the data communication amount included in the data communication amount report message is a data communication amount on the designated bearer and carrier.

According to an embodiment of the present invention, there is provided a data communication amount report method executed by a base station in a mobile communication system, including:
a data communication amount measurement step of measuring a data communication amount of a user apparatus connected to the base station for each bearer in the user apparatus for each carrier for transmitting data of the bearer; and
a data communication amount report control step of receiving a data communication amount report request message from a data communication amount management apparatus in the mobile communication system, generating a data communication amount report message including a data communication amount corresponding to a request in the data communication amount report request message, and transmitting the data communication amount report message to the data communication amount management apparatus.

According to an embodiment of the present invention, there is provided a data communication amount obtaining method executed by a data communication amount management apparatus in a mobile communication system, including:
a transmission step of transmitting, to a base station of the mobile communication system, a data communication amount report request message for requesting report of a data communication amount in a user apparatus connected to the base station; and
a reception step of receiving a data communication amount report message including a requested data communication amount from the base station that has received the data communication amount report request message,
wherein the data communication amount report request message includes information designating at least a bearer and a carrier, and wherein the data communication amount included in the data communication amount report message is a data communication amount on the designated bearer and carrier.

### EFFECT OF THE PRESENT INVENTION

According to an embodiment of the present invention, it becomes possible to grasp, in a mobile communication system that includes a base station and a user apparatus, a data communication amount of communication between the user apparatus and the base station for each bearer for each carrier.

### BRIEF DESCRIPTION OF THE DRAWINGS

Fig. 1 is a diagram showing CA up to Rel-10;
Fig. 2 is a diagram showing an example of Dual Connectivity;
Fig. 3 is a diagram showing a configuration example 1 of a communication system according to an embodiment of the present invention;
Fig. 4 is a diagram showing a configuration example 2 of a communication system according to an embodiment of the present invention;
Fig. 5 is a diagram showing a configuration example 3 of a communication system according to an embodiment of the present invention;
Fig. 6 is a diagram showing an operation sequence example of request and report;
Fig. 7A is a diagram for explaining a content example 1 of a data communication amount report request message;
Fig. 7B is a diagram for explaining a content example 1 of a data communication amount report request message;
Fig. 8A is a diagram for explaining a content example 2 of a data communication amount report request message;
Fig. 8B is a diagram for explaining a content example 2 of a data communication amount report request message;
Fig. 9A is a diagram for explaining a content example 1 of a data communication amount report message;
Fig. 9B is a diagram for explaining a content example 1 of a data communication amount report message;
Fig. 10A is a diagram for explaining a content example 1 of a data communication amount report message;
Fig. 10B is a diagram for explaining a content example 1 of a data communication amount report message;
Fig. 11 is a diagram for explaining a content example 2 of a data communication amount report message;
Fig. 12 is a diagram showing an operation sequence example 1 of data communication amount report request in a modified example;
Fig. 13 is a diagram showing an operation sequence example 2 of data communication amount report request in a modified example;
Fig. 14 is a diagram showing a content example (specification change example) of a message corresponding to the operation sequence example 1 of data communication amount report request;
Fig. 15 is a diagram showing a content example (specification change example) of a message corresponding to the operation sequence example 2 of data communication amount report request;
Fig. 16 is a diagram showing an operation sequence example 1 of data communication amount report in a modified example;
Fig. 17 is a diagram showing an operation sequence example 2 of data communication amount report request in a modified example;
Fig. 18 is a diagram showing a content example (specification change example) of a message corresponding to the operation sequence example 1 of data communication amount report;
Fig. 19 is a diagram showing a content example (specification change example) of a message corresponding to the operation sequence example 2 of data communication amount report;
Fig. 20 is a functional block diagram of a base station eNB;
Fig. 21 is a HW block diagram of a base station eNB;
Fig. 22 is a flowchart showing an operation example of a base station eNB;
Fig. 23 is a functional block diagram of a data communication amount management apparatus 20;
Fig. 24 is a HW block diagram of a data communication amount management apparatus 20;
Fig. 25 is a flowchart showing an operation example of a data communication amount management apparatus 20.

### EMBODIMENTS FOR CARRYING OUT THE INVENTION

In the following, an embodiment of the present invention is described with reference to figures. The embodiment described below is merely an example, and the embodiment to which the present invention is applied is not limited to the embodiment below. For example, it is assumed that the communication system of the present embodiment supports LTE including LTE-Advanced. However, the present invention can be applied not only to LTE but also other schemes. In the following, although a system configuration that performs CA (including Dual connectivity) is taken as an example, the present invention can be also applied to a case where CA is not performed.

In the following, "LTE" is used as wide meaning including LTE-Advanced and schemes after LTE-Advanced unless otherwise specified. Also, "carrier" used in the following may be also referred to as frequency, carrier frequency, channel and the like.

Also, in the following, basically, as to a data transmission amount that does not specify uplink or downlink, a term "data communication amount" is used, and for cases specifying uplink or downlink, a term "uplink data transmission amount", "downlink data transmission amount" or the like is used.

### (Communication system whole configuration example)

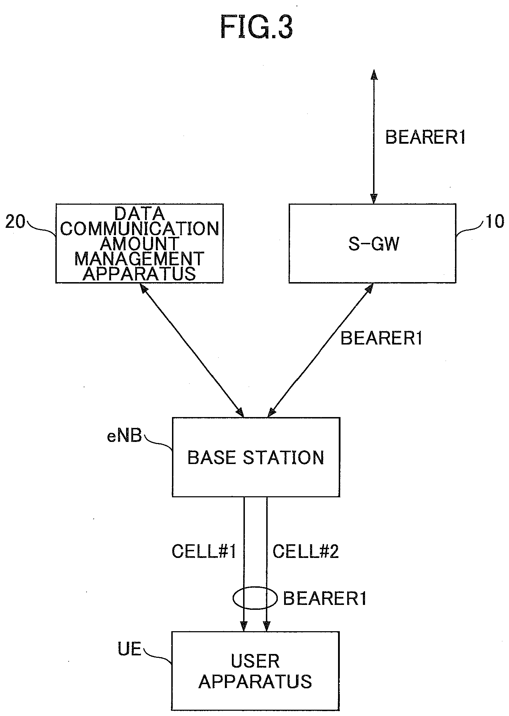

Figs. 3, 4 and 5 show configuration examples of communication systems according to an embodiment of the present invention. Each of the communication systems in the present embodiment shown in Figs. 3, 4 and 5 is a communication system of an LTE scheme.

A communication system of a configuration example 1 shown in Fig. 3 includes a user apparatus UE, a base station eNB and a data communication amount management apparatus 20. The user apparatus UE and the base station eNB can perform CA. Also, Fig. 3 shows an S-GW10. The S-GW10 is a residing area packet gateway apparatus that transmits user data, and is an apparatus that relays user data between each base station eNB and an external apparatus.

The data communication amount management apparatus 20 is an apparatus configured to obtain, from the base station eNB, a transmission amount of downlink data that the base station eNB transmits to the user apparatus UE and/or a transmission amount of uplink data that the user apparatus UE transmits to the base station eNB. As the data communication amount management apparatus 20, for example, an MME that is provided in a core network of LTE can be used. However, an apparatus having the function of the data communication amount management apparatus 20 is not limited to the MME, and an apparatus other than the MME may be provided with a function of the data communication amount management apparatus 20, or the data communication amount management apparatus 20 may be provided independently.

In the configuration example 1 shown in Fig. 3, for example, data of a bearer 1 is transmitted from the S-GW 10, so that the base station eNB transmits the data of the bearer 1 to the user apparatus UE by CA including a cell#1 and a cell#2. For example, a CC of the cell#1 may be a carrier of a licensed band, and a CC of the cell#2 may be a carrier of an unlicensed band. Also, for example, the user apparatus UE transmits data of the bearer 1 to the base station eNB by CA including the cell#1 and the cell#2, so that the data is transmitted from the base station eNB to the S-GW 10.

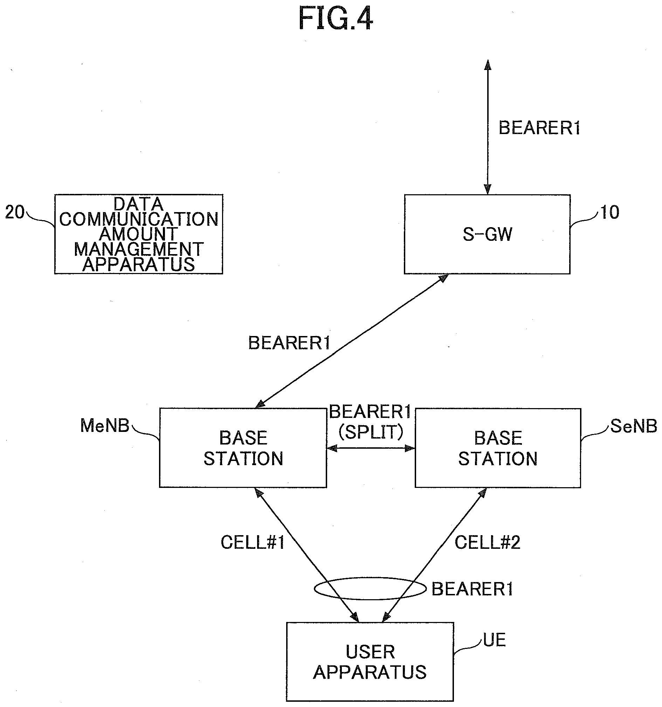

Fig. 4 shows a configuration example 2 of a communication system according to the present embodiment. As shown in Fig. 4, in the configuration example 2, a base station MeNB and a base station SeNB are provided, which enable Dual connectivity. In the example of Fig. 4, the base station MeNB performs communication with a user apparatus UE by the cell #1 and the base station SeNB performs communication with the user apparatus UE by the cell #2 so that CA is realized.

Also, in the example of Fig. 4, data of the bearer 1 is split at the base station MeNB, so that the base station MeNB transmits data of the split bearer 1 using the cell #1, and the base station SeNB transmits data of the split bearer 1 using the cell #2. Also, the user apparatus UE splits data of the bearer 1, transmits a piece of split data to the base station MeNB by the cell #1, and transmits another piece of split data to the base station SeNB by the cell #2. The base station MeNB receives the split data from the base station SeNB, and the base station MeNB transmits the data of the bearer 1 to the S-GW 10.

Note that, in Fig. 4, although the base station MeNB performs data splitting (data combining), the S-GW 10 may perform data splitting (data combining). In this case, the S-GW 10 communicates with each of the base station MeNB and the base station SeNB.

In the configuration example 2, it is assumed that the base station MeNB can ascertain transmission amounts of each piece of uplink and downlink split data. The data communication amount management apparatus 20 obtains, from the base station MeNB, uplink/downlink data transmission amounts. Also, the data communication amount management apparatus 20 may obtain uplink/downlink data transmission amounts from each of the base station MeNB and the base station SeNB.

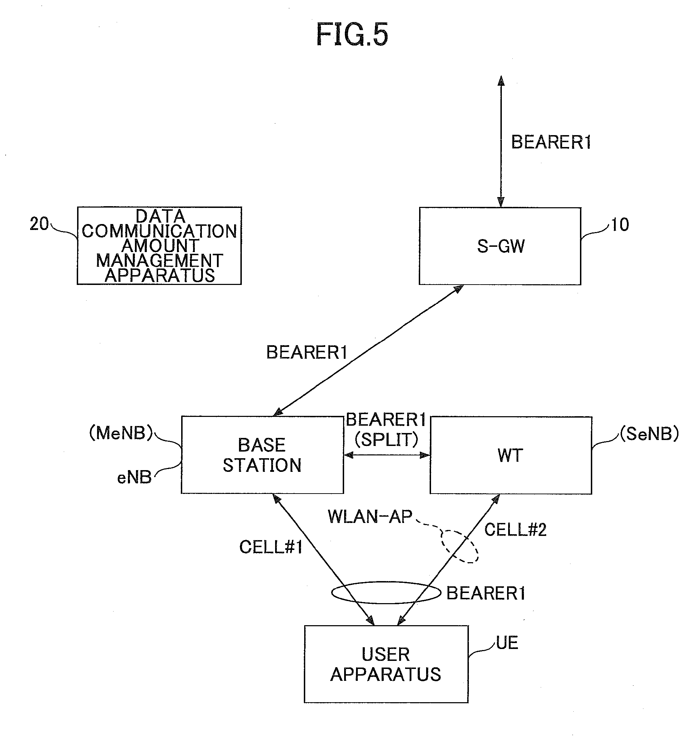

Fig. 5 shows a configuration example 3 of a communication system according to the present embodiment. As shown in Fig. 5, the configuration example 3 is configured such that a base station eNB and a WT are provided to perform LTE/WLAN aggregation using split bearer of Dual connectivity. The WT (which is an abbreviation of WLAN Termination) is an apparatus having a relay function between the base station eNB and the WLAN AP (radio LAN access point).

The configuration shown in Fig. 5 corresponds to Dual connectivity in which the base station eNB is used as an MeNB and the WT is used as an SeNB, in which transmission and reception of split data are performed in the same way as the case shown in Fig. 4. It is also possible to perform communication in a configuration in which the configuration of Fig. 4 and the configuration of Fig. 5 are combined.

Processes on request/report of data communication amounts in the present embodiment can be performed similarly in the configurations of Fig. 3, Fig. 4 and Fig. 5. Here, measurement/reporting of uplink/downlink data transmission amounts is performed by the base station eNB in the configuration of Fig. 3, performed by the base station MeNB in the configuration of Fig. 4, and performed by the base station eNB in the configuration of Fig. 5. In the following explanation, these are collectively referred to as "base station eNB". Note that, in the configuration of Fig. 4, it is also possible that the base station SeNB performs measurement/reporting of uplink/downlink data transmission amounts that the base station SeNB ascertains.

The base station eNB has a function configured to measure a downlink data transmission amount transmitted by the base station eNB to the user apparatus UE for each bearer, for each carrier, and an uplink data transmission amount transmitted by the user apparatus UE to the base station eNB for each bearer, for each carrier, and to hold them in a storage unit such as a memory and the like.

In the present embodiment, even when the base station eNB as an MeNB transmits bearer split data to an SeNB or (WT), the base station eNB includes a function configured to obtain a transmission amount of the split data transmitted from the SeNB (or WT) to the user apparatus UE, and a carrier that is used. Also, even when the base station eNB as an MeNB receives bearer split data (uplink data from the user apparatus UE) from an SeNB or (WT), the base station eNB includes a function configured to obtain the data transmission amount of the uplink data transmitted from the user apparatus UE to the SeNB (or WT), and a carrier that is used.

As to a data transmission amount of uplink data, it can be measured as a data reception amount in the base station.

### (Operation outline)

In a basic operation of the communication system in the present embodiment, the data communication amount management apparatus 20 transmits, to the base station eNB, a report request of a data communication amount designating a bearer and a carrier, so that the base station eNB reports, in response to the request, a data communication amount in the bearer and the carrier to the data communication amount management apparatus 20. The data communication amount to request/report is any one of or both of a transmission amount of downlink data transmitted to the user apparatus UE (example: total sum of data amounts of PDCP SDUs for which transmission to the UE has been acknowledged), and a transmission amount of uplink data transmitted from the user apparatus UE (example: total sum of data amounts of PDCP SDUs received from the UE).

It can be considered that, for data transmitted on carriers (unlicensed carriers) of unlicensed bands, different charging systems may be applied to applying techniques. For example, it can be considered to apply different charging systems for LAA and WLAN (example: Wi-Fi (registered trademark)). That is, including LTE on a licensed carrier, it can be considered to apply different charging systems among the next three RAT (Radio Access Technology) types (A, B and C)).
(A) LTE on licensed carrier
(B) LAA (LTE on unlicensed carrier)
(C) WLAN (Wi-Fi and the like on unlicensed carrier)

In the following, explanation is given, in which a RAT type corresponding to A is referred to as "LTE", a RAT type corresponding to B is referred to as "LTE-LAA" and a RAT type corresponding to C is referred to as "WLAN".

In the present embodiment, as to uplink/downlink data transmission amounts that the base station eNB collects and reports to the data communication amount management apparatus 20, the above-mentioned three ones can be basically distinguished. However, it is not essential to distinguish all of A, B and C. Only a part of them may be distinguished, or they may not be distinguished at all. The reason is that, even when the data communication amount management apparatus 20 or the base station does not distinguish RAT types at all, RAT types can be identified from information of carriers. In the following, more specific sequences and request/report contents are described.

### (Operation example of communication system)

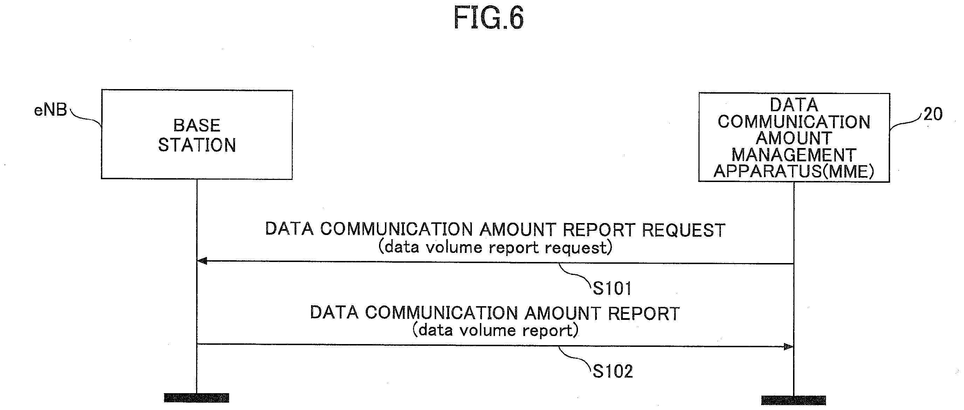

Fig. 6 is a diagram showing an operation sequence example of request and report in the present embodiment. As shown in Fig. 6, the data communication amount management apparatus 20 transmits a data communication amount report request (data volume report request) message to the base station eNB (step S101), so that the base station eNB transmits a data communication amount report (data volume report) message in response to the message (step S102).

For example, the data communication amount report request message includes identification information of one bearer or a plurality of bearers, and further includes identification information of one carrier or a plurality of carriers for each bearer. Identification information of a carrier is, for example, EARFCN (E-UTRAN Absolute Radio Frequency Channel Number), but, not limited to this. For example, when a data communication amount report request message includes bearer 1, and carriers 1 and 2 for the bearer 1, this messages means to request a data communication amount communicated by the bearer 1 and the carrier 1, and a data communication amount communicated by the bearer 1 and the carrier 2. As for a data communication amount to request, uplink or downlink may be designated in the data communication amount report request message to cause the base station to report the designated uplink/downlink data transmission amount, or uplink/downlink may not be designated in the data communication amount report request message. In the case where uplink/downlink is not designated, for example, when the base station eNB reports a data communication amount corresponding to a designated carrier, the base station eNB performs the reporting by adding information indicating that it is uplink or downlink.

Also, in the data communication amount report request message, a RAT type (any one of or a plurality of LTE, LTE-LAA and WLAN) may be designated, and a carrier may be designated for each RAT type. In this case, the base station eNB reports a data communication amount corresponding to a carrier of a designated RAT type.

The data communication amount report message includes a data communication amount corresponding to designations (bearer, RAT type, uplink, downlink, and the like) by the data communication amount report request message.

The data communication amount is, for example, a communication amount of PDCP SDUs (total sum of communication amounts from a time point until a time point), but, not limited to this. Also, the data communication amount may be represented as a value in terms of octets, or may be represented in terms of other units. Also, the data communication amount report message may include a measurement start time of measurement of the data communication amount for the data communication amount.

As to downlink data, the base station eNB measures it, and a data communication amount to report may be a transmission amount of data transmitted from the base station eNB to the user apparatus UE, or may be an amount of data, transmitted from the base station eNB to the user apparatus UE, for which reception by the user apparatus UE has been confirmed (ACK has been received). Also, as a data amount to report, in addition to the above-mentioned data transmission amount, a data amount, transmitted from the base station eNB to the user apparatus UE, for which reception by the user apparatus UE has not been confirmed may be reported. In the case where Dual Connectivity of Fig. 4, Fig. 5 or the like is performed, as to downlink data, data transmitted from the base station eNB (MeNB) to the user apparatus UE includes data transmitted to the user apparatus UE via the SeNB.

As to uplink data, a data communication amount to be measured and reported by the base station eNB may be a transmission amount of data that is transmitted from the user apparatus UE and that is received by the base station eNB, or may be a transmission amount of data, that is transmitted from the user apparatus UE and that is received by the base station eNB, for which ACK has been transmitted to the user apparatus UE.

In the case where Dual Connectivity of Fig. 4, Fig. 5 and the like is performed, as to uplink data, data that is transmitted from the user apparatus UE and received by the base station eNB (MeNB) includes data that is transmitted from the user apparatus UE to the SeNB, and transmitted from the SeNB to the base station eNB.

The data communication amount management apparatus 20 may periodically transmit a data communication amount report request message to the base station eNB, or may transmit it based on another trigger. When periodically transmitting it, for example, as to one carrier of one bearer (described as bearer/carrier), the base station eNB can perform repeatedly, while performing data communication using the bearer and the carrier, reporting, at the first time, a data communication amount in a time period from data communication start of the bearer/carrier until reception of a data communication amount report request message, and, after the report, resetting the data communication amount, and at the second time, reporting a data communication amount in a time period from the previous reporting in the bearer/carrier until reception of a data communication amount report request of this time, and after the report, resetting the data communication amount. The report of each time may include measurement start time.

Also, as an example of another trigger, for example, the data communication amount management apparatus 20 detects establishment of a bearer in the base station eNB, and after that, at a timing when detecting that connection of the bearer ends, the data communication amount management apparatus 20 transmits, to the base station eNB, a data communication amount report request message to request a data communication amount of each carrier of the bearer. The base station eNB that receives the message reports, to the data communication amount management apparatus 20, for each carrier, a data communication amount that has been communicated from the time of establishment of the bearer until the time of the end of the bearer. The report may include measurement start time.

Also, the data communication amount management apparatus 20 may transmit, to the base station eNB, a data communication amount request message without designating a specific bearer and a specific carrier so as to request a data communication amount for all currently established bearers of all using carriers. That is, in this case, all currently established bearers and all using carriers are implicitly designated. Also, by designating only a bearer, the data communication amount management apparatus 20 may implicitly request report of a data communication amount for all carriers used by the bearer.

### <Content example of message>

Concrete contents of the data communication amount report request message and the data communication amount report message used in the present embodiment are not limited to specific contents. But, for example, messages based on a message of DATA VOLUME REPORT REQUEST and a message of DATA VOLUME REPORT described in the non-patent document 2 can be used.

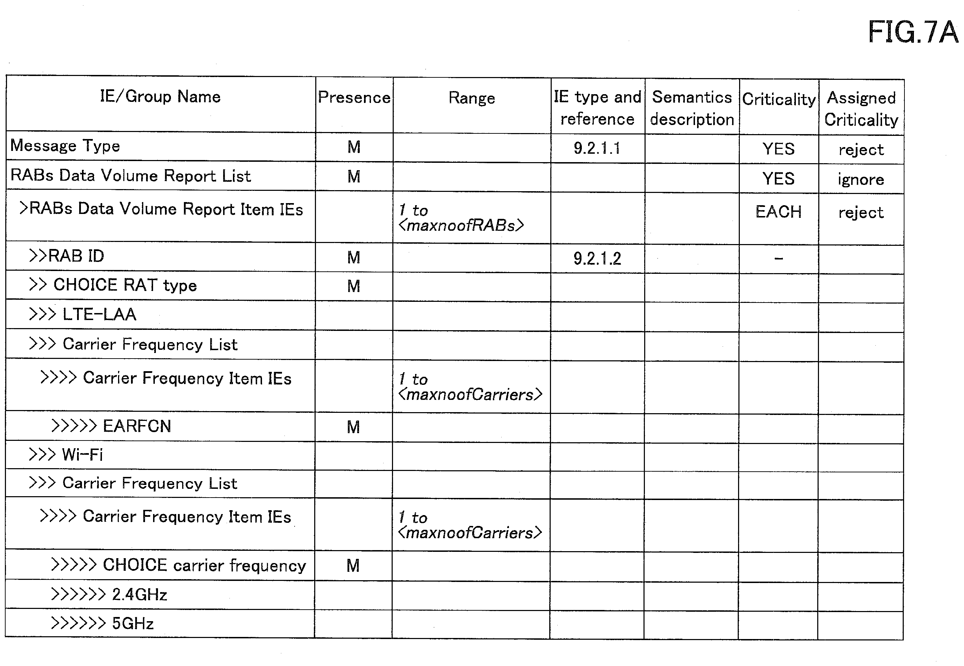

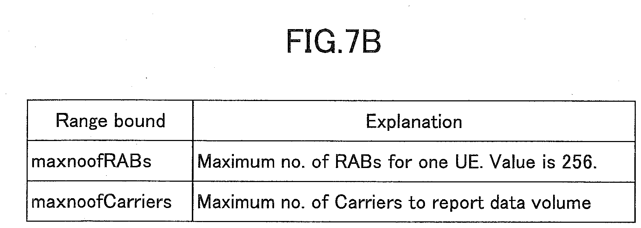

Figs. 7A and 7B show a content example 1 of the data communication amount report request message. As described above, the message is based on a message of DATA VOLUME REPORT REQUEST described in the non-patent document 2, and meaning itself of items such as Presence, Criticality and so on in Figs. 7A and 7B may be considered to be the same meaning described in the non-patent document 2.

Message Type in Fig. 7A is information indicating that the message is a data communication amount report request message. As shown in Fig. 7A, the message includes RABs Data Volume Report List, an element of the List is RABs Data Volume Report Item IE, and RABs Data Volume Report Item IE includes RAB ID, and CHOICE RAT type indicating a selected RAT type.

Also, it includes Carrier Frequency List for each designated RAT type (LTE-LAA and WLAN in the present example). Element of Carrier Frequency List is Carrier Frequency Item IE, and Carrier Frequency Item IE consists of EARFCN.

RAB ID indicates a bearer (Radio Access Bearer) of a report target, and EARFCN indicates a carrier (Carrier Frequency) of a report target. Also, in this example, as a carrier of WLAN, a carrier of a band of 2.4GHz and a carrier of 5GHz can be designated. Also, a specific channel in 2.4GHz/5GHz may be designated. As shown in Fig. 7B, each range of the number of bearers and the number of carriers are defined.

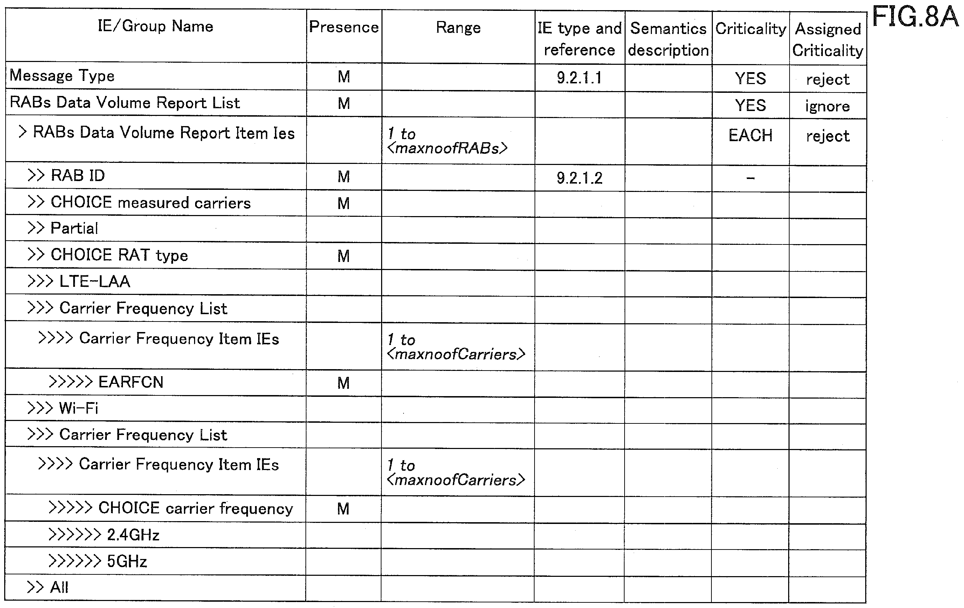

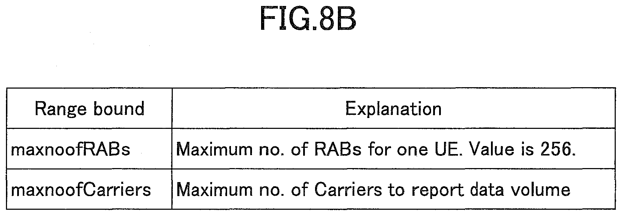

Figs. 8A and 8B are figures showing a content example 2 of the data communication amount report request message. In the example shown in Figs. 8A and 8B, "All" is added. In a data communication amount report request message, designating ALL for a bearer means requesting report of uplink and downlink data transmission amounts for each of all carriers, that has transmitted the bearer, including LTE, LTE-LAA and WLAN.

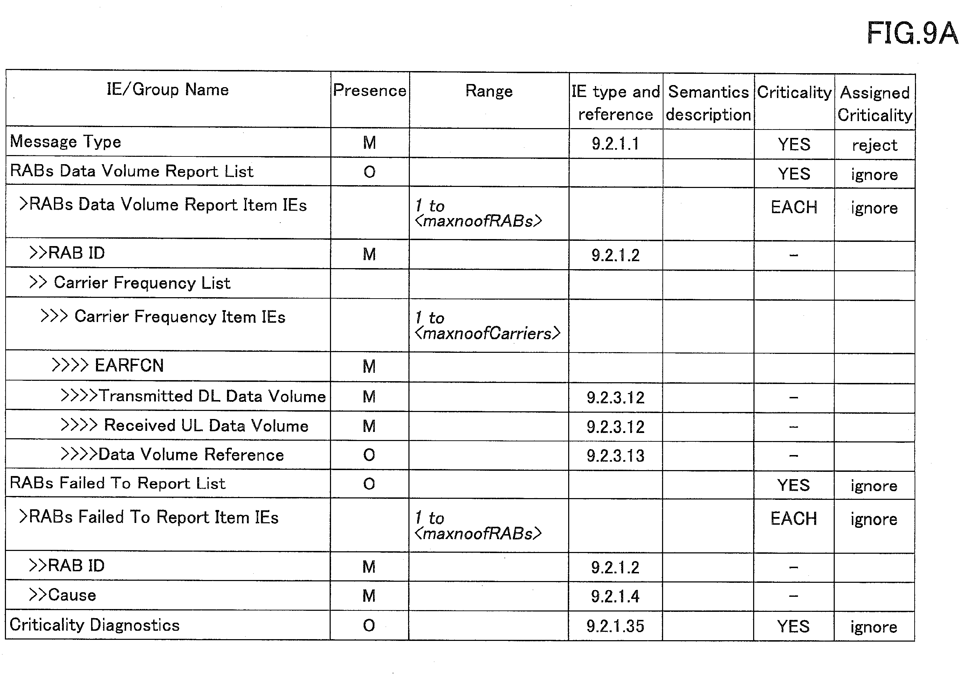

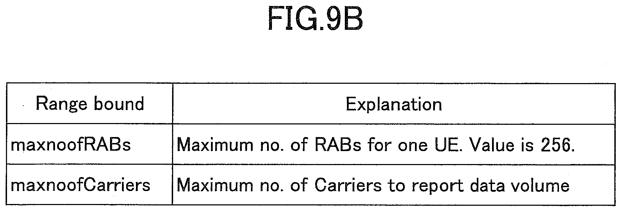

Figs. 9A and 9B show a content example 1 of the data communication amount report message. The message is based on a message of DATA VOLUME REPORT described in the non-patent document 2.

Message Type in Fig. 9A is information indicating that the message is a data communication amount report message. As shown in Fig. 9A, the message includes RABs Data Volume Report List, an element of the List is RABs Data Volume Report Item IE, and RABs Data Volume Report Item IE includes RAB ID, and Carrier Frequency List. Element of Carrier Frequency List is Carrier Frequency Item IE, and Carrier Frequency Item IE includes EARFCN, Transmitted DL Data Volume, Received UL Data Volume, and Data Volume Reference. As shown in Fig. 9B, each range of the number of bearers and the number of carriers are defined.

Transmitted DL Data Volume/Received UL Data Volume is information for each carrier (each EARFCN), and indicates a data amount of total sum of PDCP SDUs of downlink/uplink that have been transmitted on the carrier. Data Volume Reference is also information for each carrier (each EARFCN), and indicates a time (reference time) when starting measurement. That is, Transmitted DL Data Volume/Received UL Data Volume indicates a cumulative data communication amount from the reference time until the current time (time of report) for a corresponding carrier of a corresponding bearer.

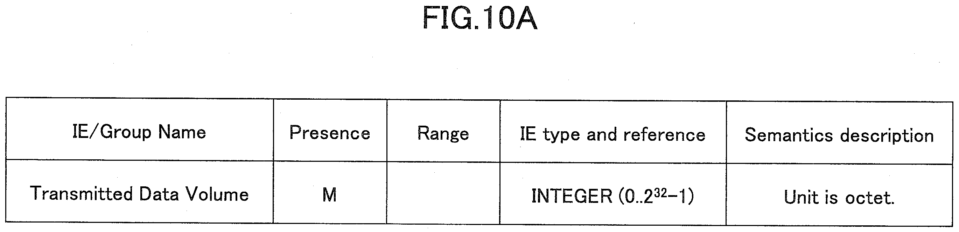

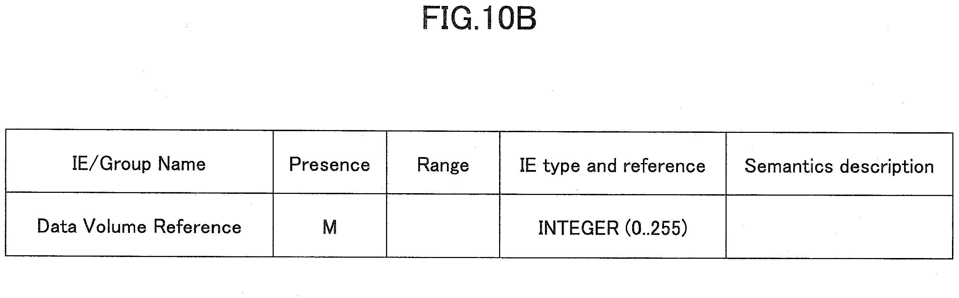

As shown in Figs. 10A and 10B, Transmitted Data Volume (Transmitted DL Data Volume, Received UL Data Volume) is, for example, an integer of a predetermined range in terms of octets, and Data Volume Reference is an integer of a predetermined range.

Further, as shown in Fig. 9A, the data communication amount report message may include information indicating a bearer in which communication (uplink transmission or downlink transmission) failed and the reason for failure as RABs Failed To Report Item IE. Also, as described before, the data communication amount report message may include, for each bearer for each carrier, a transmission amount of data, transmitted to the user apparatus UE, for which reception by the user apparatus UE has not been confirmed.

The example shown in Figs. 9A and 9B is an example of a case where RAT type is not reported. For example, when receiving a request on one type of RAT type in a data communication amount report request message, a message shown in Figs. 9A and 9B can be used for transmitting report on the RAT type.

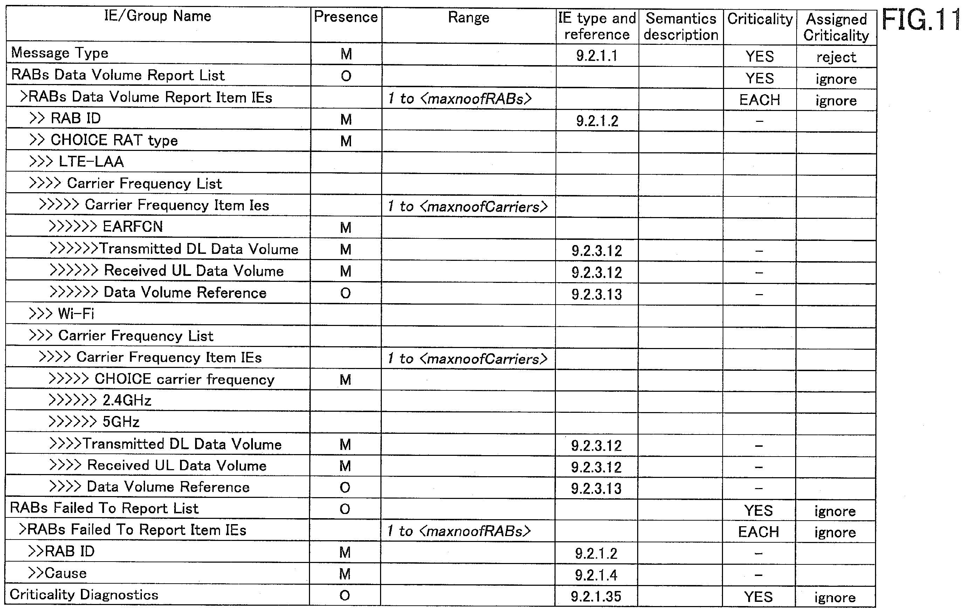

Fig. 11 shows a content example 2 of the data communication amount report message. The message is also based on a message of DATA VOLUME REPORT described in the non-patent document 2. The message corresponds to the data communication amount report request message shown in Figs. 7A and 7B or Figs. 8A and 8B.

Message Type in Fig. 11 is information indicating that the message is a data communication amount report message. As shown in Fig. 11, the message includes RABs Data Volume Report List, an element of the List is RABs Data Volume Report Item IE, and RABs Data Volume Report Item IE includes RAB ID, and CHOICE RAT type indicating a RAT type.

Also, it includes Carrier Frequency List for each designated RAT type (LTE-LAA and WLAN in this example). Element of Carrier Frequency List is Carrier Frequency Item IE, and Carrier Frequency Item IE includes EARFCN, Transmitted DL Data Volume, Received UL Data Volume, and Data Volume Reference.

On LTE-LAA, Transmitted DL Data Volume/Received UL Data Volume is information for each carrier (each EARFCN), and indicates a data amount of total sum of PDCP SDUs of downlink/uplink that have been transmitted on the carrier. Data Volume Reference is also information for each carrier (each EARFCN), and indicates a time (reference time) when starting measurement. That is, Transmitted DL Data Volume/Received UL Data Volume indicates a cumulative data communication amount from the reference time until the current time (time of report) for a corresponding carrier of a corresponding bearer.

Also, in this example, as carriers of WLAN, a carrier of the band of 2.4 GHz and a carrier of 5 GHz can be designated. Also, a specific channel in 2.4GHz/5GHz may be designated.

Also, like the case of Figs. 9A and 9B, the data communication amount report message may include information indicating a bearer in which transmission failed and the reason for failure.

### (Modified example)

In the examples so far, as the data communication amount report request message and the data communication amount report message, introduction of dedicated messages for request/report is assumed. However, data communication amount request/report may be performed by adding an information element for designating data communication amount request/report in a message primarily intended to other than data communication amount request/report. In the following, an example in which data communication amount request/report is performed by using such a message is described as a modified example. In the following examples, content (designation of bearer, RAT type, carrier, uplink, downlink and the like) of the data communication amount report request message, and content (report of data communication amount of designated bearer, RAT type, carrier, uplink, downlink and the like) of the data communication amount report message are similar to those described so far.

### <Request of data communication amount report>

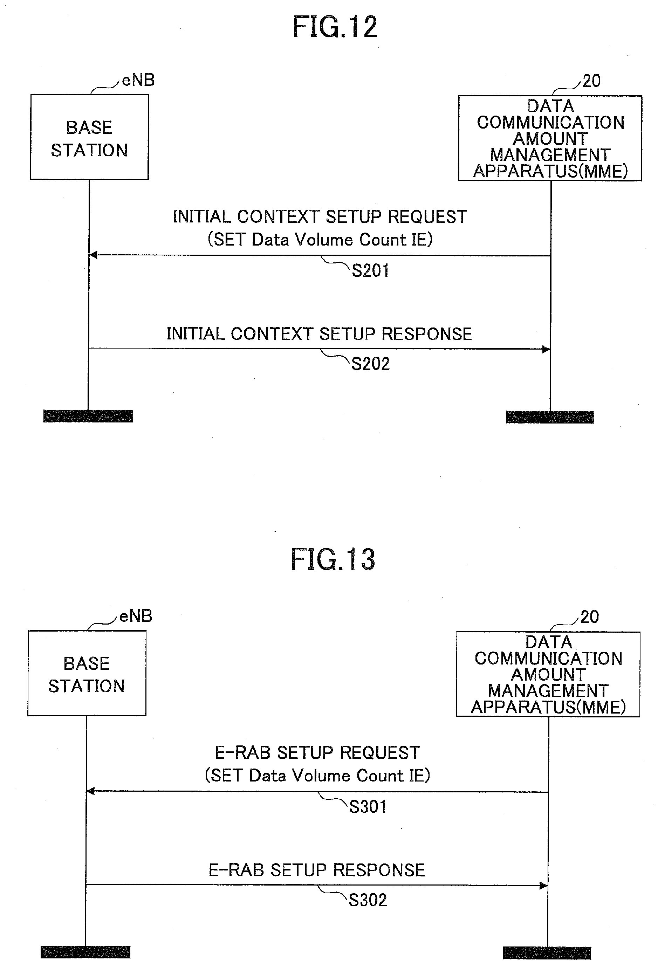

First, an example for requesting data communication amount report is described. Fig. 12 is an example using a message in Initial Context Setup procedure. As shown in Fig. 12, in step S201, the data communication amount management apparatus 20 (MME in this example) transmits, to the base station eNB, an Initial Context Setup Request message as a data communication amount report request message. In step S202, the base station eNB returns an Initial Context Setup Response message as a response of the Initial Context Setup Request message.

The Initial Context Setup Request message is a message indicating attach acceptance in an attach procedure executed when power-on of the UE, for example, and includes an establishment request of a bearer that is a target of data communication amount report. Also, the Initial Context Setup Response message includes information indicating establishment completion of the bearer.

Especially, the Initial Context Setup Request message of the present embodiment includes Data Volume Request IE (which may be referred to as Data Volume count IE) indicating a request of data communication amount report of a bearer for which establishment is requested.

Fig. 13 is an example where a message in E-RAB Setup Modification procedure is utilized. As shown in Fig. 13, in step S301, the data communication amount management apparatus 20 (MME in this example) transmits, to the base station eNB, an E-RAB Setup Request message as a data communication amount report request message. In step S302, the base station eNB returns an E-RAB Setup Response message as a response of the E-RAB Setup Request message.

The E-RAB Setup Request message is a message that is used for additionally establishing a bearer of a target of data communication amount report, for example, and includes an establishment request of the bearer. Also, the E-RAB Setup Response message includes information indicating establishment completion of the bearer.

Especially, the E-RAB Setup Request message of the present embodiment includes Data Volume Request IE (which may be referred to as Data Volume count IE) indicating a request of data communication amount report of a bearer for which establishment is requested.

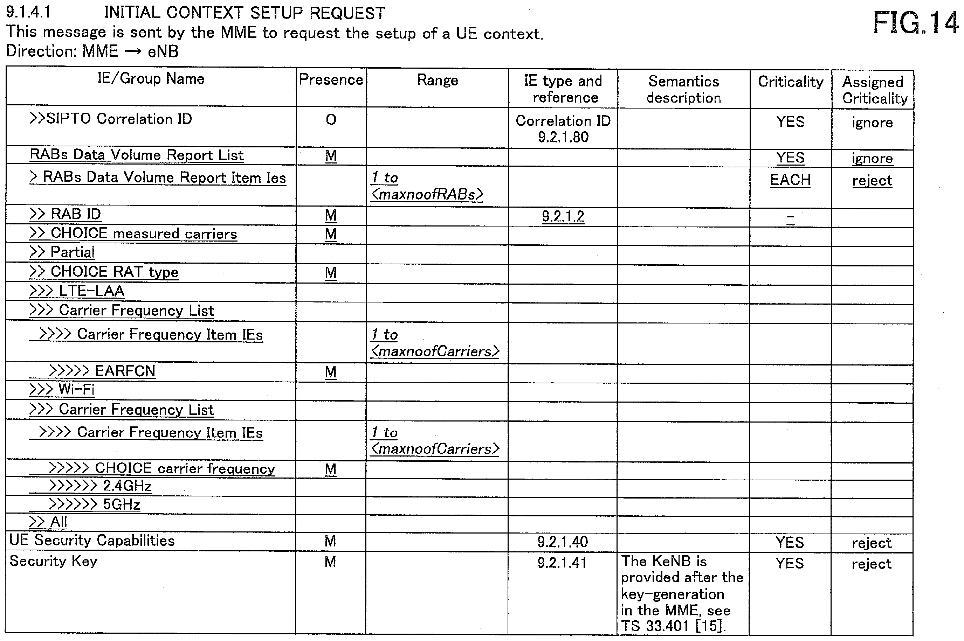

Fig. 14 shows a content example of the Initial Context Setup Request message corresponding to step S201 in Fig. 12. Fig. 14 is an excerpt of a part of the Initial Context Setup Request message in the non-patent document 4, in which changed parts from the non-patent document 4 are underlined. The underlined parts correspond to the Data Volume Request IE. As shown in the underlined parts of Fig. 14, content of the Data Volume Request IE is similar to that of the message shown in Fig. 8A.

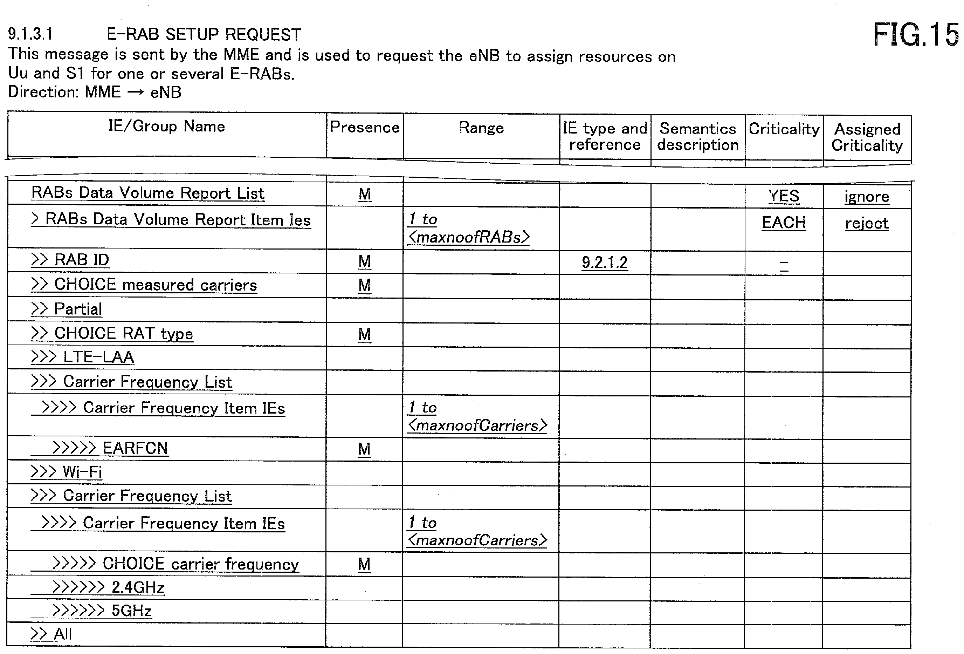

Fig. 15 shows a content example of the E-RAB Setup Request message corresponding to step S301 in Fig. 13. Fig. 15 is an excerpt of a part of the E-RAB Setup Request message in the non-patent document 4, in which changed parts from the non-patent document 4 are underlined. The underlined parts correspond to the Data Volume Request IE. As shown in the underlined parts of Fig. 15, content of the Data Volume Request IE is similar to that of the message shown in Fig. 8A.

The base station eNB that receives the above-mentioned message starts measurement of a data communication amount on a bearer, a RAT type, a carrier and the like specified by the Data Volume Request IE.

### <Data communication amount report>

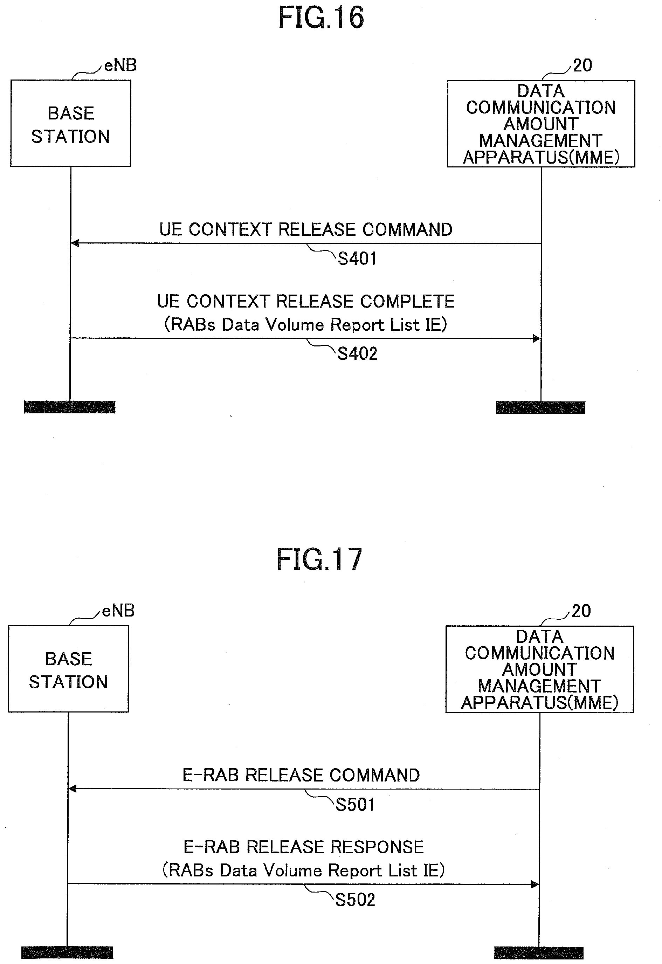

Next, an example in data communication amount report is described. Fig. 16 is an example using a message in Initial Context Release procedure. As shown in Fig. 16, in step S401, the data communication amount management apparatus 20 (MME in this example) transmits a UE Context Release Command message. Then, in step S402, the base station eNB transmits a UE Context Release Complete message to the data communication amount management apparatus 20 as a response for the UE Context Release Command message.

The UE Context Release Command message is a message for instructing to release logical connections such as bearers on the UE. The base station eNB that receives the UE Context Release Command message (including an ID of the UE) performs processing for releasing the bearers of the UE, and as to a bearer for which data communication report has been requested by the request shown in Fig. 12 or Fig. 13, the base station eNB includes the data communication amount measured for the bearer in the UE Context Release Complete message as RABs Data Volume Report List IE, and transmits the message to the data communication amount management apparatus 20.

Fig. 17 is an example using a message in E-RAB Release procedure. As shown in Fig. 17, in step S501, the data communication amount management apparatus 20 (MME in this example) transmits an E-RAB Release Command message. Then, in step S502, the base station eNB transmits an E-RAB Release Response message to the data communication amount management apparatus 20 as a response for the E-RAB Release Command message.

The E-RAB Release Command message is a message for instructing to release a bearer, and includes an ID of a UE, and identification information of one bearer or a plurality of bearers. The base station eNB that receives the E-RAB Release Command message performs processing for releasing the designated bearers, and as to a bearer, in the designated bearers, for which data communication amount report has been requested by the request shown in Fig. 12 or Fig. 13, the base station eNB includes the data communication amount measured for the bearer in the E-RAB Release Response message as RABs Data Volume Report List IE, and transmits the message to the data communication amount management apparatus 20.

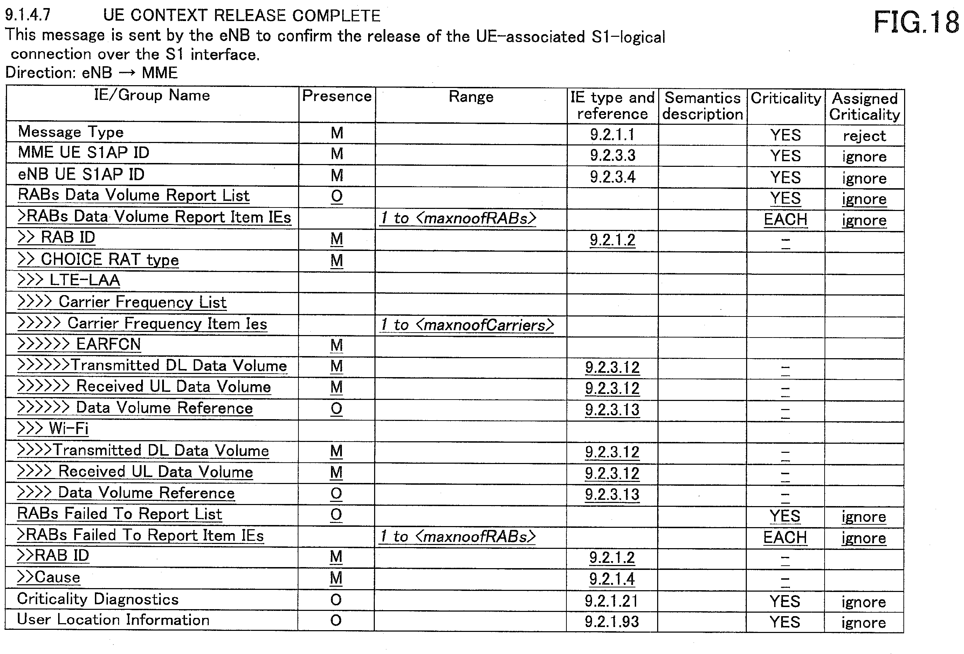

Fig. 18 shows a content example of the UE Context Release Complete message corresponding to step S401 in Fig. 16. Fig. 18 is an excerpt of a part of the UE Context Release Complete message in the non-patent document 4, in which changed parts from the non-patent document 4 are underlined. The underlined parts correspond to the RABs Data Volume Report List IE. As shown in the underlined parts off Fig. 18, content of the RABs Data Volume Report List IE is similar to that of the message shown in Fig. 11.

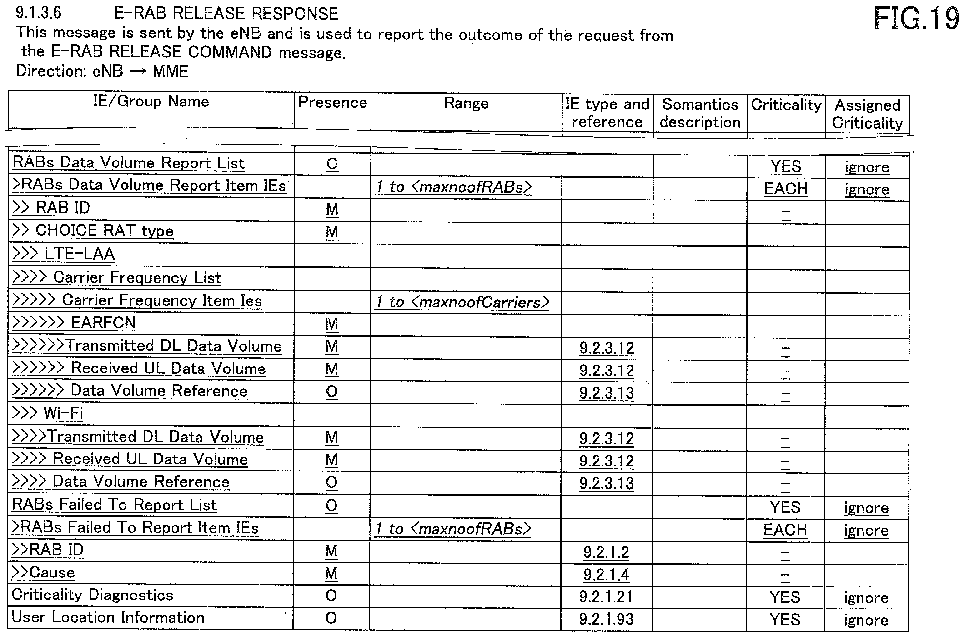

Fig. 19 shows a content example of the E-RAB Release Response message corresponding to step S502 in Fig. 17. Fig. 19 is an excerpt of a part of the E-RAB Release Response message in the non-patent document 4, in which changed parts from the non-patent document 4 are underlined. The underlined parts correspond to the RABs Data Volume Report List IE. As shown in the underlined parts of Fig. 19, content of the RABs Data Volume Report List IE is similar to that of the message shown in Fig. 11.

As described above, in the modified example, uplink/downlink communication amounts are measured (counted) while a bearer is established (from establishment until release), so that the data communication amount can be obtained by using an existing procedure.

### (Apparatus configuration, operation flow)

### <Base station eNB>

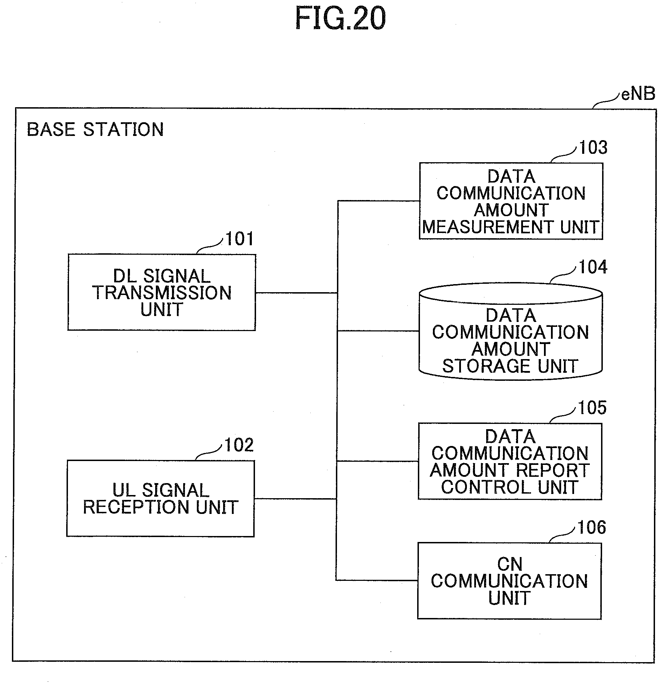

Fig. 20 shows a functional block diagram of the base station eNB according to the present embodiment. As shown in Fig. 20, the base station eNB includes a DL signal transmission unit 101, an UL signal reception unit 102, a data communication amount measurement unit 103, a data communication amount storage unit 104, a data communication amount report control unit 105, and a CN communication unit 106. Fig. 20 only shows functional units especially related to the embodiment of the present invention in the base station eNB, and the base station eNB also includes at least functions, not shown in the figure, for performing operation complying with LTE.

The DL signal transmission unit 101 includes functions configured to generate various signals of physical layer from upper layer information to be transmitted from the base station eNB, and transmit the signals to the user apparatus UE. The UL signal reception unit 102 includes functions configured to receive various signals from user apparatuses UE and obtain information of an upper layer from the received physical layer signals. Especially, in the present embodiment, the DL signal transmission unit 101 can transmit data of a bearer using a plurality of carriers by CA. Also, the UL signal reception unit 102 can receive data of a bearer transmitted from the user apparatus UE using a plurality of carriers by CA.

The data communication amount measurement unit 103 is configured to measure a data transmission amount of downlink data transmitted to the user apparatus UE by the DL signal transmission unit 101 for each bearer, for each carrier, and to store the measured data transmission amount in the data communication amount storage unit 104 for each bearer, for each carrier, which are measurement units. More specifically, for example, each time when a packet (example: PDCP SDU) is transmitted by the DL signal transmission unit 101, the data communication amount measurement unit 103 counts (adds) data amount of the packet. Accordingly, the data communication amount measurement unit 103 stores a data communication amount for each bearer for each carrier.

The carrier may be any of a licensed carrier and an unlicensed carrier, so that the data communication amount measurement unit 103 may store a data transmission amount for each bearer, for each RAT type (LTE, LTE-LAA, WLAN and the like), for each carrier.

Also, as described with reference to Fig. 4 and Fig. 5, in the case where Dual Connectivity is configured and the base station eNB functions as an MeNB, even when the DL signal transmission unit 101 transmits split data to an SeNB (or WT) by split bearer so that the split data is transmitted to the user apparatus UE from the SeNB (or WT), the data communication amount measurement unit 103 can measure and store a data transmission amount for each bearer, for each RAT type (LTE, LTE-LAA, WLAN and the like), for each carrier.

Also, the data communication amount measurement unit 103 is configured to measure a data transmission amount of uplink data received from the user apparatus UE by the UL signal reception unit 102 for each bearer, for each carrier, and to store the measured data transmission amount in the data communication amount storage unit 104 for each bearer, for each carrier, which are measurement units. More specifically, for example, each time when a packet (example: PDCP SDU) is received by the UL signal reception unit 102, the data communication amount measurement unit 103 counts (adds) data amount of the packet. Accordingly, the data communication amount storage unit 104 stores a data communication amount for each bearer for each carrier.

The carrier may be any of a licensed carrier and an unlicensed carrier, so that the data communication amount measurement unit 103 may store a data transmission amount for each bearer, for each RAT type (LTE, LTE-LAA, WLAN and the like), for each carrier.

Also, as described with reference to Fig. 4 and Fig. 5, in the case where Dual Connectivity is configured and the base station eNB functions as an MeNB, even when the UL signal reception unit 102 receives split data from an SeNB (or WT) by split bearer and transmits it to the core network side, the data communication amount measurement unit 103 can measure and store a data transmission amount for each bearer, for each RAT type (LTE, LTE-LAA, WLAN and the like), for each carrier.

The data communication amount report control unit 105 is configured to receive a data communication amount report request message from the data communication amount management apparatus 20 via the CN communication unit 105, to obtain a data communication amount from the data communication amount storage unit 104 according to bearer / RAT type / carrier / uplink / downlink or the like designated in the data communication amount report request message, to generate a data communication amount report message including the designated data communication amount to pass the message to the CN communication unit 106. In the case of the modified example, for example, the data communication amount measurement unit 103 may measure only a data communication amount corresponding to bearer / RAT type / carrier / uplink / downlink and the like designated in the data communication amount report request message so as to report the measured data communication amount by a data communication amount report message.

The CN communication unit 106 is a functional unit configured to communicate with the core network. In the present embodiment, the CN communication unit 106 is configured to receive a data communication amount report request message from the data communication amount management apparatus 20, and to transmit a data communication amount report message to the data communication amount management apparatus 20.

As described in the modified example, the data communication amount report control unit 105 also include a function configured to execute processing of data communication amount report using an existing procedure.

The configuration of the base station eNB shown in Fig. 20 may be realized by hardware circuits (example: one or a plurality of IC chips) as a whole, or may be realized by hardware circuits for a part and by a CPU and a program for other parts.

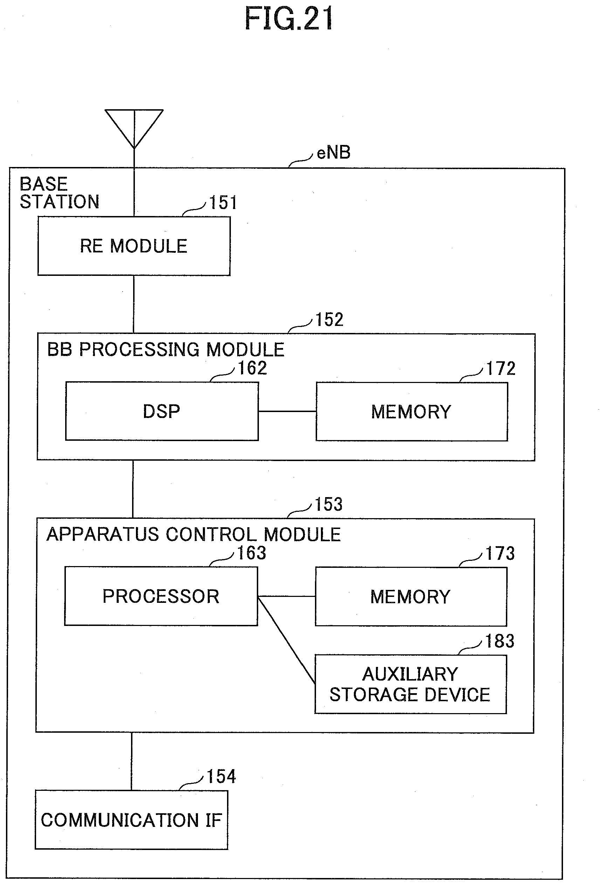

Fig. 21 is a diagram showing an example of a hardware (HW) configuration of the base station eNB. Fig. 21 shows a configuration closer to an implementation example than Fig. 20. As shown in Fig. 21, the base station eNB includes an RE module 151 for performing processing on radio signals, a BB processing module 152 for performing baseband signal processing, an apparatus control module 153 for performing processes of upper layer and the like, and a communication IF 154 that is an interface for connecting to a network.

The RE module 151 generates a radio signal that should be transmitted from an antenna by performing D/A conversion, modulation, frequency conversion, and power amplifying and the like on a digital baseband signal received from the BB processing module 152. Also, the RE module 151 generates a digital baseband signal by performing frequency conversion, A/D conversion, demodulation and the like on a received radio signal, so as to pass the signal to the BB processing module 152. The RE module 151 includes, for example, functions of physical layer and the like of the DL signal transmission unit 101 and the UL signal reception unit 102.

The BB processing module 152 performs processing for converting between IP packets and digital baseband signals. The DSP 162 is a processor for performing signal processing in the BB processing module 152. The memory 172 is used as a work area of the DSP 162. The BB processing module 152 may include, for example, functions of layer 2 and the like of the DL signal transmission unit 101 and the UL signal reception unit 102, the data communication amount measurement unit 103, the data communication amount storage unit 104, and the data communication amount report control unit 105. All of or a part of functions of the data communication amount measurement unit 103, the data communication amount storage unit 104, and the data communication amount report control unit 105 may be included in the apparatus control module 153.

The apparatus control module 153 performs protocol processing of IP layer, OAM processing, and the like. The processor 163 is a processor for performing processes performed by the apparatus control module 153. The memory 173 is used as a work area of the processor 163. The auxiliary storage device 183 is, for example, an HDD and the like, and stores various setting information and the like for operation of the base station eNB. The communication interface 154 corresponds to the CN communication unit 106.

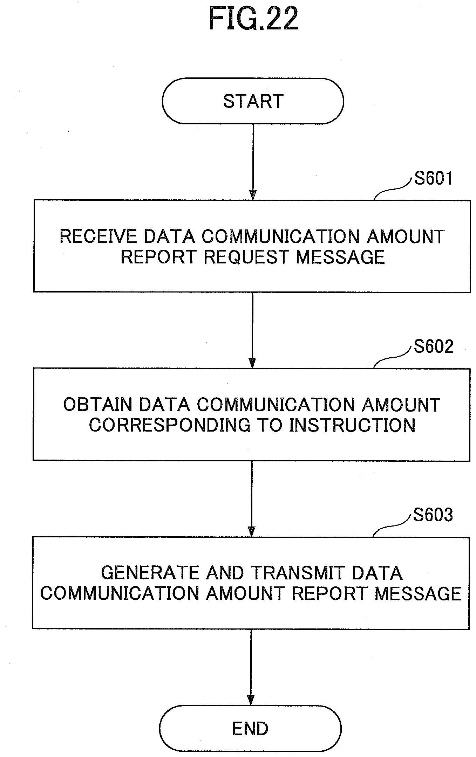

Next, an operation example of the base station eNB is described with reference to a flowchart of Fig. 22. Note that the flowchart of Fig. 22 corresponds to processing shown in Fig. 6.

The base station eNB receives a data communication amount report request message from the data communication amount management apparatus 20 (step S601). The data communication amount report control unit 105 in the base station eNB obtains a data communication amount from the data communication amount storage unit 104 based on an instruction (bearer / RAT type / carrier / uplink / downlink or the like) in the received data communication amount report request message (step S602).

The data communication amount report control unit 105 generates a data communication amount report message including the data communication amount corresponding to the instruction, passes the data communication amount report message to the CN communication unit 106, so that the CN communication unit 106 transmits the data communication amount report message to the data communication amount management apparatus 20 (step S603).

### <Data communication amount management apparatus 20>

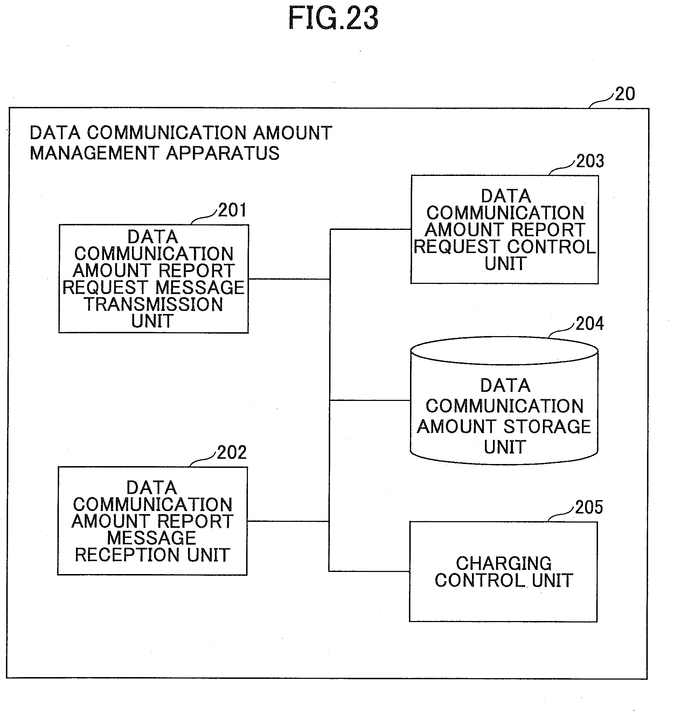

Fig. 23 shows a functional block diagram of the data communication amount management apparatus 20 according to the present embodiment. As shown in Fig. 23, the data communication amount management apparatus 20 includes a data communication amount report request message transmission unit 201, a data communication amount report message reception unit 202, a data communication amount report request control unit 203, a data communication amount storage unit 204 and a charging control unit 205. Fig. 23 only shows functional units especially related to the embodiment of the present invention in the data communication amount management apparatus 20, and the data communication amount management apparatus 20 also includes at least functions, not shown in the figure, for performing operation as an apparatus forming the core network of LTE scheme. For example, in the case where the MME serves as the data communication amount management apparatus 20, that is, when the data communication amount management apparatus 20 is an MME, the data communication amount management apparatus 20 also includes functions of the MME.

The data communication amount report request message transmission unit 201 is configured to generate a data communication amount report request message designating one or a plurality of bearers, RAT type, one or a plurality of carriers, distinction of uplink / downlink or the like, and to transmit the massage to the base station eNB. Note that, RAT type, one or a plurality of carriers, distinction of uplink / downlink or the like may not be designated.

The data communication amount report message reception unit 202 is configured to receive a data communication amount report message transmitted from the base station eNB that has received the data communication amount report request message, and to store a data communication amount included in the massage in the data communication amount storage unit 204.

The data communication amount report request control unit 203 is configured to detect a transmission trigger of the data communication amount report request message, and to instruct the data communication amount report request message transmission unit 201 to transit the data communication amount report request message. The transmission trigger is, for example, arrival of a periodic timing, end of a bearer in the base station eNB and the like. Also, as described in the modified example, the data communication amount report request control unit 203 also has a function configured to execute control of data communication amount report request by using the existing procedure. In that case, the transmission trigger (a trigger for setting Data Volume Request IE) becomes a transmission timing of UE Initial Context Setup Request/E-RAB Setup Request.

The data communication amount storage unit 204 can store a data communication amount for each bearer, for each RAT type, for each carrier, and for each of uplink and downlink. The data communication amount may be stored with information indicating a time period during which data communication is performed (a time period during which a bearer is set), a time at which measurement is started, and a time at which the data communication amount is received, and the like.

The charging control unit 205 is configured to perform processing on charging using the data communication amount stored in the data communication amount storage unit 204. The processing on charging can be considered to be, for example, transmitting data communication amounts for each bearer for each carrier to an apparatus for performing charging, aggregating data communication amounts for each carrier in a predetermined period for each user apparatus, and the like.

The data communication amount management apparatus 20 can be realized by using, for example, a configuration of a computer that includes a CPU and a memory and that is realized by the program being executed by the CPU (processor).

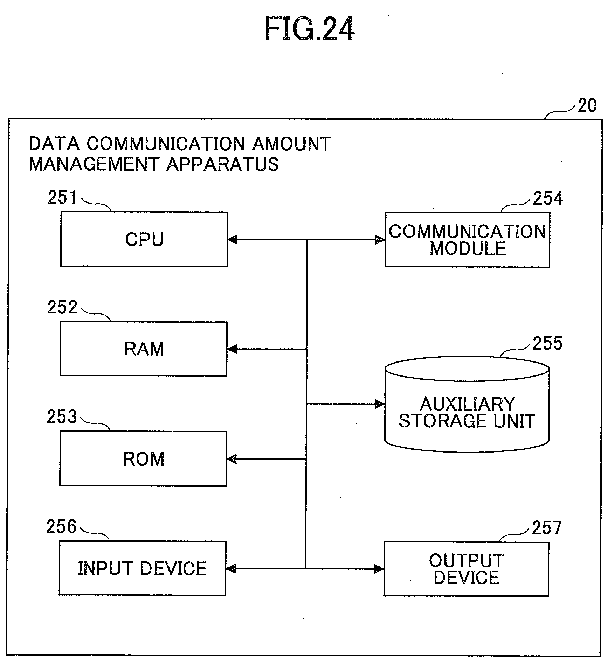

Fig. 24 shows an example of a hardware (HW) configuration of the data communication amount management apparatus 20 in the case where the data communication amount management apparatus 20 is configured by the above-mentioned computer.

As shown in Fig. 24, the data communication amount management apparatus 20 includes a CPU 251, a RAM (Random Access Memory) 252, a ROM (Read Only Memory) 253, a communication module 254 for performing communication, an auxiliary storage device 255 such as a hard disk and the like, an input device 256 and an output device 257.

The CPU 251 reads out and executes a program stored in storage means such as the RAM 252, the ROM 253, the auxiliary storage device 255 and the like, so that operation of each function of the data communication amount management apparatus 20 is executed. Also, for processing in which communication is performed, the communication module 254 is used. Also, for example, input of configuration information for the data communication amount management apparatus 20 is performed by the input device 256, and for example, output of operating state of the data communication amount management apparatus 20 and the like can be performed by the output device 257.

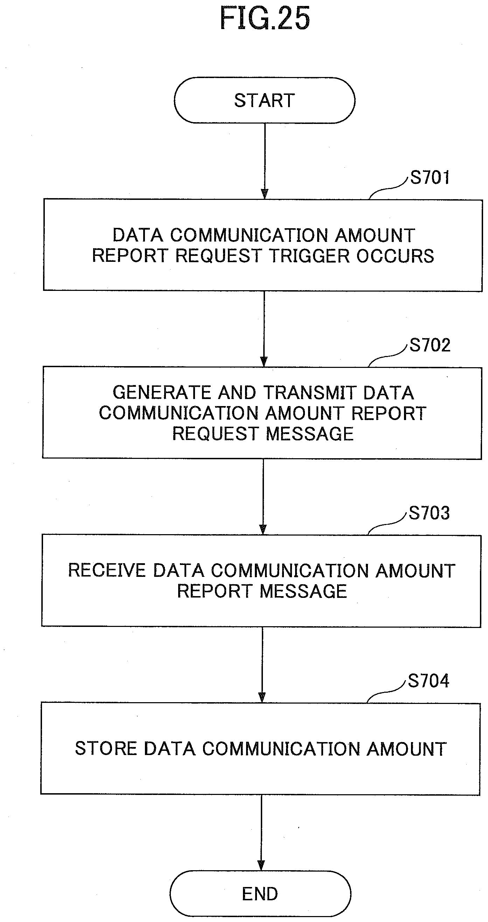

Next, an operation example of the data communication amount management apparatus 20 is described with reference to a flowchart of Fig. 25. Note that the flowchart of Fig. 25 corresponds to processing shown in Fig. 6.

In step S701, a data communication amount report request trigger occurs, so that the data communication amount report request control unit 203 detects the trigger, and instructs the data communication amount report request message transmission unit 201 to transmit a data communication amount report request message.

The data communication amount report request message transmission unit 201 generates a data communication amount report request message and transmits it to the base station eNB (step S702). For example, when the data communication amount report request trigger is a trigger of end of communication of a bearer (when a bearer is deleted), the data communication amount report request message transmission unit 201 generates a data communication amount report request message including identification information of the bearer and identification information of each carrier used for data communication of the bearer, and transmits it to the base station eNB.

The data communication amount report message reception unit 202 of the data communication amount management apparatus 20 receives, from the base station eNB, a data communication amount report message that is a response for the data communication amount report request message transmitted in step S702 (step S703), and stores a data communication amount included in the data communication amount report message in the data communication amount storage unit 204 (step S704).

As described above, according to the present embodiment, there is provided a base station in a mobile communication system, including:
data communication amount measurement means configured to measure a data communication amount of a user apparatus connected to the base station for each bearer in the user apparatus for each carrier for transmitting data of the bearer; and
data communication amount report control means configured to receive a data communication amount report request message from a data communication amount management apparatus in the mobile communication system, generate a data communication amount report message including a data communication amount corresponding to a request in the data communication amount report request message, and transmit the data communication amount report message to the data communication amount management apparatus.

According to the above-configuration, it becomes possible to grasp, in a mobile communication system that includes a base station and a user apparatus, a data communication amount of communication between the user apparatus and the base station for each bearer for each carrier.

The data communication amount of the user apparatus is, for example, a transmission amount of uplink data transmitted by the user apparatus, or a transmission amount of downlink data that the base station transmits to the user apparatus. According to this configuration, as a data communication amount, a data transmission amount of each of uplink and downlink can be obtained.

The data communication amount report request message may include information for designating a bearer, a RAT type, and a carrier, and the data communication amount report control means may be configured to transmit the data communication amount report message including a data communication amount on the designated bearer, RAT type and carrier to the data communication amount management apparatus. According to this configuration, since a data communication amount can be obtained by identifying a RAT type, charging processing can be properly performed according to a RAT type, for example.

The RAT type is LTE in which a licensed band is used, LTE in which an unlicensed band is used, or a radio LAN, for example. By making it possible to identify such RAT types, for example, a data communication amount in carrier aggregation between WLAN/LAA and LTE which is assumed to be introduced in Rel-13 and the like can be ascertained for each RAT type, so that proper charging processing can be realized, for example.

The data communication amount report request message may be a message for establishing a bearer that is a target of report request of the data communication amount, and the data communication amount report message may be a message for reporting release of the bearer. According to this configuration, a data communication amount can be obtained by using an existing bearer establishment procedure /bearer release procedure.

According to the present embodiment, there is provided a data communication amount management apparatus in a mobile communication system, including:
transmission means configured to transmit, to a base station of the mobile communication system, a data communication amount report request message for requesting report of a data communication amount in a user apparatus connected to the base station; and
reception means configured to receive a data communication amount report message including a requested data communication amount from the base station that has received the data communication amount report request message,
wherein the data communication amount report request message includes information designating at least a bearer and a carrier, and wherein the data communication amount included in the data communication amount report message is a data communication amount on the designated bearer and carrier.

According to the above-configuration, it becomes possible to ascertain, in a mobile communication system that includes a base station and a user apparatus, a data communication amount of communication between the user apparatus and the base station for each bearer for each carrier.

The data communication amount report request message may include information for designating a bearer, a RAT type, and a carrier, and the reception means may be configured to receive the data communication amount report message including a data communication amount on the designated bearer, RAT type and carrier from the base station. According to this configuration, since a data communication amount can be obtained by identifying a RAT type, charging processing can be properly performed according to a RAT type, for example.

The data communication amount report request message may be a message for establishing a bearer that is a target of report request of the data communication amount, and the data communication amount report message may be a message for reporting release of the bearer. According to this configuration, a data communication amount can be obtained by using an existing bearer establishment procedure /bearer release procedure.

"Means" in the above-mentioned configuration of each apparatus may be replaced with "unit", "circuit", "device" or the like.

In the above, the embodiment of the present invention has been explained. However, the disclosed invention is not limited to the embodiment. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the base station eNB and the data communication amount management apparatus 20 have been explained by using functional block diagrams. However, such an apparatus may be implemented in hardware, software, or a combination thereof.

The software operating according to the present invention, that is, the software executed by a processor provided in the base station eNB and the software executed by a processor provided in the data communication amount management apparatus 20 may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the spirit of the present invention.

The present patent application claims priority based on Japanese patent application No. 2015-152658, filed in the JPO on July 31, 2015, and the entire contents of the Japanese patent application No. 2015-152658 are incorporated herein by reference.

### DESCRIPTION OF REFERENCE SIGNS

UE user apparatus
eNB base station
20 data communication amount management apparatus
101 DL signal transmission unit
102 UL signal reception unit
103 data communication amount measurement unit
104 data communication amount storage unit
105 data communication amount report control unit
106 CN communication unit
151 RE module
152 BB processing module
153 apparatus control module
154 communication IF
201 data communication amount report request message transmission unit
202 data communication amount report message reception unit
203 data communication amount report request control unit
204 data communication amount storage unit
205 charging control unit
251 CPU
252 RAM
253 ROM
254 communication module
255 auxiliary storage device
256 input device
257 output device

## Claims

1. A base station in a mobile communication system, comprising:
data communication amount measurement means configured to measure a data communication amount of a user apparatus connected to the base station for each bearer in the user apparatus for each carrier for transmitting data of the bearer; and
data communication amount report control means configured to receive a data communication amount report request message from a data communication amount management apparatus in the mobile communication system, generate a data communication amount report message including a data communication amount corresponding to a request in the data communication amount report request message, and transmit the data communication amount report message to the data communication amount management apparatus.

2. The base station as claimed in claim 1, wherein the data communication amount of the user apparatus is a transmission amount of uplink data transmitted by the user apparatus, or a transmission amount of downlink data that the base station transmits to the user apparatus.

3. The base station as claimed in claim 1 or 2, wherein the data communication amount report request message includes information for designating a bearer, a RAT type, and a carrier, and wherein the data communication amount report control means is configured to transmit the data communication amount report message including a data communication amount on the designated bearer, RAT type and carrier to the data communication amount management apparatus.

4. The base station as claimed in claim 3, wherein the RAT type is LTE in which a licensed band is used, LTE in which an unlicensed band is used, or a radio LAN.

5. The base station as claimed in any one of claims 1-4, wherein the data communication amount report request message is a message for establishing a bearer that is a target of report request of the data communication amount, and the data communication amount report message is a message for reporting release of the bearer.

6. A data communication amount management apparatus in a mobile communication system, comprising:
transmission means configured to transmit, to a base station of the mobile communication system, a data communication amount report request message for requesting report of a data communication amount in a user apparatus connected to the base station; and
reception means configured to receive a data communication amount report message including a requested data communication amount from the base station that has received the data communication amount report request message,
wherein the data communication amount report request message includes information designating at least a bearer and a carrier, and wherein the data communication amount included in the data communication amount report message is a data communication amount on the designated bearer and carrier.

7. The data communication amount management apparatus as claimed in claim 6, wherein the data communication amount report request message includes information for designating a bearer, a RAT type, and a carrier, and wherein the reception means is configured to receive the data communication amount report message including a data communication amount on the designated bearer, RAT type and carrier from the base station.

8. The data communication amount management apparatus as claimed in claim 6 or 7, wherein the data communication amount report request message is a message for establishing a bearer that is a target of report request of the data communication amount, and the data communication amount report message is a message for reporting release of the bearer.

9. A data communication amount report method executed by a base station in a mobile communication system, comprising:
a data communication amount measurement step of measuring a data communication amount of a user apparatus connected to the base station for each bearer in the user apparatus for each carrier for transmitting data of the bearer; and
a data communication amount report control step of receiving a data communication amount report request message from a data communication amount management apparatus in the mobile communication system, generating a data communication amount report message including a data communication amount corresponding to a request in the data communication amount report request message, and transmitting the data communication amount report message to the data communication amount management apparatus.

10. A data communication amount obtaining method executed by a data communication amount management apparatus in a mobile communication system, comprising:
a transmission step of transmitting, to a base station of the mobile communication system, a data communication amount report request message for requesting report of a data communication amount in a user apparatus connected to the base station; and
a reception step of receiving a data communication amount report message including a requested data communication amount from the base station that has received the data communication amount report request message,
wherein the data communication amount report request message includes information designating at least a bearer and a carrier, and wherein the data communication amount included in the data communication amount report message is a data communication amount on the designated bearer and carrier.
